(19) Europäisches Patentamt
European Patent Office
Office européen des brevets

(11) Veröffentlichungsnummer: **0 474 062 B1**

(12) **EUROPÄISCHE PATENTSCHRIFT**

(45) Veröffentlichungstag der Patentschrift: **13.12.95**

(51) Int. Cl.⁶: **C09K 19/30**, C09K 19/34, G02F 1/137

(21) Anmeldenummer: **91114155.4**

(22) Anmeldetag: **23.08.91**

Die Akte enthält technische Angaben, die nach dem Eingang der Anmeldung eingereicht wurden und die nicht in dieser Patentschrift enthalten sind.

# (54) Matrix-Flüssigkristallanzeige

(30) Priorität: **04.09.90 DE 4027981**

(43) Veröffentlichungstag der Anmeldung:
**11.03.92 Patentblatt 92/11**

(45) Bekanntmachung des Hinweises auf die Patenterteilung:
**13.12.95 Patentblatt 95/50**

(84) Benannte Vertragsstaaten:
**DE GB**

(56) Entgegenhaltungen:
**EP-A- 0 216 672**
**WO-A-88/02130**
**WO-A-88/07514**
**DE-A- 4 100 131**

(73) Patentinhaber: **MERCK PATENT GmbH**
**Postfach,**
**Frankfurter Strasse 250**
**D-64271 Darmstadt (DE)**

(72) Erfinder: **Geelhaar, Thomas Dr.**
**Trajanstrasse 12**
**W-6500 Mainz (DE)**
Erfinder: **Rieger, Bernhard, Dr., Wacore**
**Tamagawagakuen 2834,**
**Ootadaira, Nara-machi,**
**Midori**
**Yokohama-shi Kangawa-pref.227 (JP)**
Erfinder: **Reiffenrath, Volker**
**Jahnstrasse 15**
**W-6101 Rossdorf (DE)**
Erfinder: **Bartmann, Ekkehard, Dr.**
**Dieburger Weg 12a**
**W-6106 Erzhausen (DE)**
Erfinder: **Coates, David, Dr.**
**87 Sopwith Crescent Merley**
**Wimborne Drset BH21 3SW (GB)**

EP 0 474 062 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Matrix Flüssigkristallanzeige basierend auf dem Prinzip der elektrisch kontrollierten Doppelbrechung mit

- zwei planparallelen Trägerplatten, die mit einer Umrandung eine Zelle bilden,
- integrierten nicht-linearen Elementen zur Schaltung einzelner Bildpunkte auf den Trägerplatten,
- einer in der Zelle befindlichen nematischen Flüssigkristallmischung mit negativer dielektrischer Anisotropie und hohem spezifischen Widerstand,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad

wobei die nematische Flüssigkristallmischung mindestens eine Verbindung enthält, welche ein Strukturelement der Formel 1, 2 oder 3

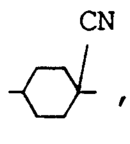 , 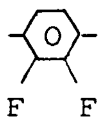 , 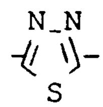

1 2 3

aufweist, dadurch gekennzeichnet, daß die Doppelbrechung $\Delta n$ der Flüssigkristallmischung zwischen 0.04 und 0,16 liegt, wobei sich die Angabe der Doppelbrechung auf 20 °C und eine Wellenlänge von 589 nm bezieht.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta \epsilon$ Werte -0,5 und -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf.

Aus der EP-A-0 216 672 sind solche ECB-Anzeigen bekannt, welche Verbindungen mit eine Strukturelement der Formel 1 enthalten und aus der WO-A-8 802 130 solche, welche Verbindungen mit einem Strukturelement der Formel 2 enthalten.

Diese Medien weisen jedoch optische Anisotropien auf, welche stets größer als 0,10 sind.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen

unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde, MFK-Anzeigen welche auf dem ECB-Effekt beruhen bereitzustellen, die die oben angegebenen Nachteile nicht oder nur in geringerem Maße und gleichzeitig sehr hohe spezifische Widerstände aufweisen.

Es wurde nun gefunden, daß diese Aufgabe gelöst werden kann, wenn man in diesen Anzeigeelementen nematische Flüssigkristallmischungen verwendet, die mindestens eine Verbindung enthält welche ein Strukturelement der Formel 1, 2 oder 3

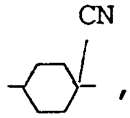 , 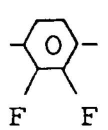 , 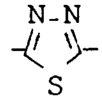

1 2 3

aufweist.

Gegenstand der Erfindung ist somit eine Matrix Flüssigkristallanzeige basierend auf dem Prinzip der elektrisch kontrollierten Doppelbrechung mit

- zwei planparallelen Trägerplatten, die mit einer Umrandung eine Zelle bilden,
- integrierten nicht-linearen Elementen zur Schaltung einzelner Bildpunkte auf den Trägerplatten,
- einer in der Zelle befindlichen nematischen Flüssigkristallmischung mit negativer dielektrischer Anisotropie und hohem spezifischen Widerstand,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad

wobei die nematische Flüssigkristallmischung mindestens eine Verbindung enthält, welche ein Strukturelement der Formeln 1, 2 oder 3

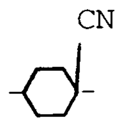 , 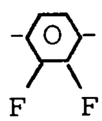 , 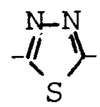

1 2 3

aufweist, und deren Doppelbrechung zwischen 0,04 und 0,10 liegt, wobei sich die Angaben der Doppelbrechung auf 20 °C und eine Wellenlänge von 589 nm bezieht, insbesondere eine
Anzeige, wobei die Flüssigkristallmischung einen nematischen Phasenbereich von mindestens 60 K und eine Viskosität von maximal 30 mPa.s bei 20 °C aufweist und/oder, wobei
die Flüssigkristallmischung ein $\Delta\epsilon$ von etwa -0,5 bis -5 aufweist, wobei $\Delta\epsilon$ die dielektrische Anisotropie bedeutet und/oder, wobei
die Dielektrizitätskonstante $\epsilon_{\parallel}$ größer oder gleich 3 ist.

Insbesondere bevorzugt sind solche Anzeigen, wobei die Flüssigkristallmischung mindestens eine Verbindung der Formel I enthält,

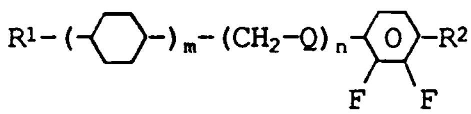

I

wobei

| | |
|---|---|
| $R^1$ und $R^2$ | jeweils unabhängig voneinander einen Alkyl- oder Alkenyl-Rest mit bis zu 16 C-Atomen, worin in diesen Resten ein oder zwei $CH_2$-Gruppen durch -O- oder -S- ersetzt sein können, |
| Q | O oder $CH_2$, |
| m | 1 oder 2, und |
| n | 0 oder 1 |

bedeuten.

Weiterhin bevorzugt sind solche Anzeigen, wobei die Flüssigkristallmischung mindestens eine Verbindung der Formel II enthält,

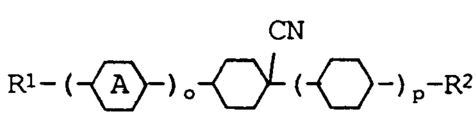

II

wobei $R^1$ und $R^2$ die für Formel I angegebene Bedeutung besitzen, und

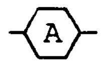

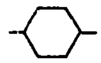 oder 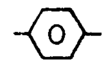 ,

o 1 oder 2, und
p 0 oder 1

bedeuten.

Eine bevorzugte Ausführungsform dieser Erfindung sind Anzeigen, wobei die Flüssigkristallmischungen neben den Verbindungen, welche ein Strukturelement der Formeln 1, 2 oder 3 aufweisen, mindestens eine Verbindung der Formel III enthält,

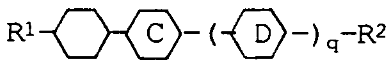 III

wobei $R^1$ und $R^2$ die für Formel I gegebene Bedeutung besitzen,

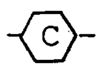

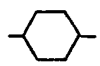 , 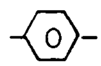 oder 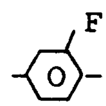 ,

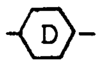

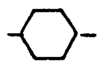 oder 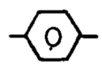 , und

q 0, 1 oder 2

bedeuten, wobei im Falle q = 2 die Ringe

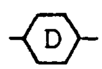

gleich oder verschieden sein können.

Die Verwendung der nematischen Flüssigkristallmischungen der in mindestens einem der Ansprüche 1 bis 8 definierten Zusammensetzung, zur Verbesserung der spezifischen Widerstände von Matrix Flüssigkristallanzeigen basierend auf den ECB-Effekt ist ebenfalls Gegenstand der Erfindung.

Von den Verbindungen, welche ein Strukturelement der Formel 1 aufweisen, sind die Carbonitrile der Formel IV besonders bevorzugt,

$R^4$-$(A^o$-$Z^o)_p$-A-$R^5$ IV

worin

$R^4$ und $R^5$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

A

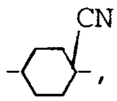,

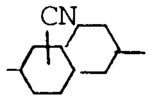 , oder 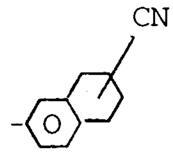

oder eine dieser Gruppen,
worin eine oder mehrere $CH_2$-Gruppen durch O und/oder S oder aliphatische und/oder aromatische CH-Gruppen durch N ersetzt sind,

- $A^o$ jeweils unabhängig voneinander unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch -O- und/ oder -S- und/oder eine -CH-$CH_2$-Gruppierung durch -C = N- ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetranydro-2,6-naphthylen (4H-Na), gegebenenfalls durch Halogen oder CN substituiert,
- $Z^o$ jeweils unabhängig voneinander -CO-O, -O-CO-, -$CH_2$O-, -O$CH_2$-, -$CH_2$$CH_2$-, -CHCN-$CH_2$- -$CH_2$-CHCN-oder eine Einfachbindung, und
- p 1, 2 oder 3 bedeuten,

Von den Verbindungen, welche ein Strukturelement der Formel 2 oder 3 aufweisen, sind die Verbindungen der Formel V bevorzugt,

$$R^6\text{-}(A^1\text{-}Z^1)_m\text{-}A\text{-}(Z^2\text{-}A^2)_n\text{-}R^7 \qquad V$$

worin

- $R^6$ und $R^7$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH = CH- oder auch durch eine Kombination von zwei geeigneten Gruppierungen ersetzt sein können, wobei zwei Heteroatome nicht direkt miteinander verknüpft sind,
- $A^1$ und $A^2$ jeweils unabhängig voneinander unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch -O- und/ oder -S- und/oder eine -CH-$CH_2$-Gruppierung durch -C = N-ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen (4H-Na), gegebenenfalls durch Halogen oder CN substituiert,
- A Thiadiazo-2,5-diyl oder 2,3-Difluor-1,4-phenylen,
- $Z^1$ und $Z^2$ jeweils -CO-O-, -O-CO-, -$CH_2$$CH_2$-, -O$CH_2$-, -$CH_2$O- oder eine Einfachbindung,
- m 1 oder 2 und
- n 0 oder 1

bedeuten,
wobei für m = 2 die beiden Gruppen $A^1$ und $Z^1$ gleich oder voneinander verschieden sein können.

Darüber hinaus können die erfindungsgemäßen Anzeigen zusätzlich eine Verbindung der Formel VI enthalten,

$$R^8\text{-}(A^3\text{-}Z^1)_o\text{-}Q^1\text{-}CC\text{-}Q^2\text{-}(Z^2\text{-}A^4)_p\text{-}R^9 \qquad VI$$

worin

- $R^8$ und $R^9$ jeweils unabhängig voneinander eine Alkylgruppe mit jeweils 1 bis 15 C-Atomen, worin auch eine oder mehrere $CH_2$-Gruppen durch eine Gruppierung ausgewählt aus der

Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet,

$A^3$ und $A^4$ jeweils unabhängig voneinander trans-1,4-Cyclohexylen, worin auch eine oder zwei nicht benachbarte $CH_2$-Gruppen durch -O- und/oder -S- ersetzt sein können oder 1,4-Phenylen, worin auch eine oder mehrere CH-Gruppen durch N ersetzt sein können,

o und p jeweils unabhängig voneinander 0 oder 1,

und $Z^1$ und $Z^2$ die bei Formel III angegebene Bedeutung haben.

Schließlich können die erfindungsgemäßen Anzeigen zusätzlich eine Verbindung der Formel V enthalten,

$$R^8\text{-}(A^1\text{-}Z^1)_m\text{-}Q^1\text{-}CC\text{-}R^{10} \qquad V$$

worin $R^{10}$ eine Alkylgruppe mit 1 bis 15 C-Atomen bedeutet, und $R^8$, $A^1$, $Z^1$, $Q^1$ und m die oben angegebene Bedeutung haben. Die Herstellung der nematischen Flüssigkristallmischungen erfolgt in an sich üblicher Weise. In der Regel wird die gewünschte Menge der in geringerer Menge verwendeten Komponenten in der den Hauptbestandteile ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebenen Zusätze enthalten. Beispielsweise können 0-15 % pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249-258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Die einzelnen Komponenten der Formel I bis VII der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formeln I und V werden beispielsweise beschrieben in WO 89-08637, DE 39 06 019 und DE 39 06 052.

Entsprechende Verbindungen der Formel II und IV werden beispielsweise beschrieben in DE 32 31 707.

Verbindungen der Formeln III sind teilweise beschrieben in DE 29 27 277, DE 26 36 684, DE 29 48 836, DE 31 17 152, DE 32 11 601 und DE 33 21 373 und D. Demus et al., Flüssige Kristalle in Tabellen II, VEB Deutscher Verlag für Grundstoffindustrie, Leipzig, 1984.

Die Verbindungen der Formel VI sind beispielsweise beschrieben in WO 88-07514 und DE 22 26 376.

Die Verbindungen der Formel VII sind beispielsweise beschrieben in JP-60 202 830, JP-61 263 933 und DE 37 34 517.

Die nematischen Flüssigkristallmischungen der erfindungsgemäßen Anzeigen enthalten vorzugsweise mindestens 5 % von Verbindungen der Formel I, insbesondere bevorzugt 7 bis 50 % von Verbindungen der Formel I.

Vorzugsweise enthalten diese Mischungen mindestens eine lateral fluorierte Verbindung der Formel IV, worin die Summe von m, n und o 1 oder 2 ist, insbesondere worin einer der Indizes m, n und o 2 bedeutet.

Die nematischen Flüssigkristallmischungen enthalten vorzugsweise mindestens 10 % von Verbindungen der Formel II, insbesondere bevorzugt 10 bis 30 % von Verbindungen der Formel II oder IV. Vorzugsweise enthalten die erfindungsgemäßen Phasen mindestens eine Verbindung der Formel II oder IV, worin A eine in 1- oder 4-Position durch CN substituierte 1,4-Cyclohexylengruppe bedeutet, insbesondere eine Gruppe der Formel

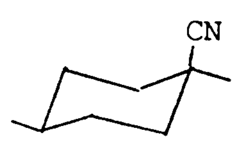

mit einer Nitrilgruppe in axialer Position. $R^4$ und $R^5$ sind vorzugsweise geradkettiges Alkyl oder Alkoxy, insbesondere Alkyl, mit vorzugsweise 2 bis 7 C-Atomen. $A^o$ ist vorzugsweise jeweils unabhängig voneinander trans-1,4-Cyclohexylen, 1,4-Phenylen (unsubstituiert oder durch Fluor substituiert), Pyrimidin-2,5-diyl oder Pyridin-2,5-diyl. $Z^o$ ist vorzugsweise jeweils eine Einfachbindung. p ist vorzugsweise 1 oder 2.

Besonders bevorzugte Verbindungen der Formel IV sind diejenigen der Teilformeln IVa bis IVc:

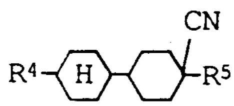

IVa

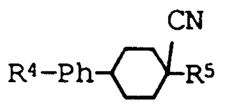

IVb

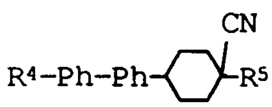

IVc

Besonders bevorzugt sind Verbindungen der Teilformeln IVa und IVc. -Ph-Ph- ist vorzugsweise

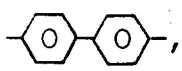 , 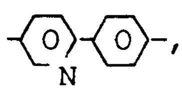 , 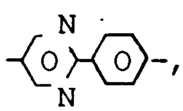 , 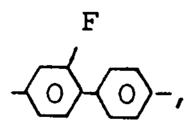 , 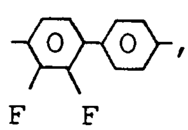 ,

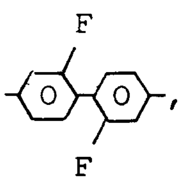 , 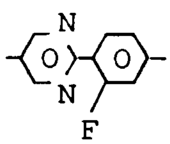 oder 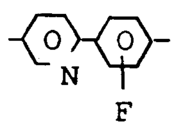

oder das Spiegelbild der unsymetrischen Gruppen.

Bevorzugte nematische Flüssigkristallmischungen enthalten mindestens eine Verbindung der Formel IVa, insbesondere mindestens eine lateral fluorierte Verbindung der Formel IVc. Ferner bevorzugt sind nematische Flüssigkristallmischungen enthaltend Verbindungen der Formel IVa und Verbindungen der Formel V.

Bevorzugte Phasen enthalten 30 bis 90 %, insbesondere 49 bis 86 % von Verbindungen der Formel V.

$R^6$ und $R^7$ sind vorzugsweise jeweils unabhängig voneinander Alkyl oder Alkoxy mit 2 bis 7 C-Atomen. m ist vorzugsweise 1. $A^1$ und $A^2$ sind vorzugsweise jeweils unabhängig voneinander trans-1,4-Cyclohexylen oder 1,4-Phenylen. $Z^1$ und $Z^2$ sind jeweils unabhängig voneinander vorzugsweise -CO-O-, -O-CO-, $-CH_2CH_2-$ oder eine Einfachbindung, insbesondere bevorzugt $-CH_2CH_2-$ oder eine Einfachbindung. Besonders bevorzugte Verbindungen der Formel V sind diejenigen der Teilformeln Va bis Vm

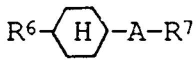 Va

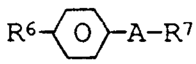 Vb

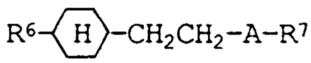 Vc

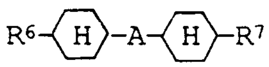 Vd

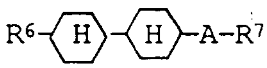 Ve

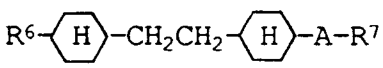 Vf

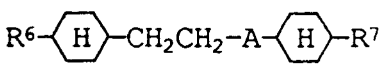 Vg

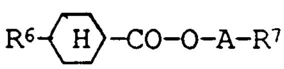 Vh

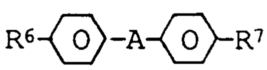 Vi

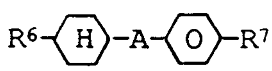 Vj

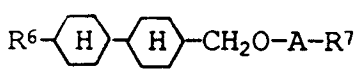 Vk

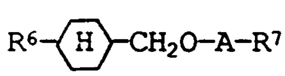 Vl

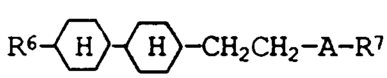 Vm

Besonders bevorzugt sind Verbindungen der Teilformeln Va, Vb, Vc, Vh und Vj, insbesondere worin -A- 2,3-Difluor-1,4-phenylen bedeutet.

Besonders bevorzugte Phasen enthalten ferner noch mindestens eine Komponente der Formel VI und/oder VII. $R^3$ ist vorzugsweise geradkettiges Alkyl oder Alkoxy mit jeweils 2 bis 7 C-Atomen. $R^6$ bzw. $R^7$ sind jeweils bevorzugt geradkettiges Alkyl mit 1 bis 7 C-Atomen. $Q^1$ und $Q^2$sind jeweils unabhängig voneinander vorzugsweise 1,4-Phenylen oder durch Fluor substituiertes 1,4-Phenylen. $A^1$, $A^3$ und $A^4$ sind jeweils unabhängig voneinander vorzugsweise trans-1,4-Cyclohexylen oder 1,4-Phenylen. $Z^1$ nd $Z^2$ sind jeweils vorzugsweise Einfachbindungen.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≦ -0,3. Sie enthält bevorzugt Verbindungen der Formel V, insbesondere der Formel Va und/oder

Verbindungen der Formel IV mit einer

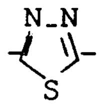

oder

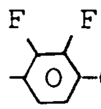Gruppe,

insbesondere Verbindungen der Formeln Va, Vb, Vh, Vi, Vj und Vk. Der Anteil der Komponente A liegt zwischen 8 % und 50 %.

Für Komponente A wird vorzugsweise eine (oder mehrere) Einzelverbindung(en) gewählt, die einen Wert von $\Delta\epsilon \leqq 0{,}5$, vorzugsweise $\Delta\epsilon \leqq -0{,}8$ haben. Dieser Wert muß umso negativer sein, je kleiner der Anteil A an der Gesamtmischung ist.

Bei sehr hohem Anteil der Komponente A kann der Wert der Komponente A auch nur schwach negativ sein, z.B. im Bereich von -0,5 bis -1,0. Neben den genannten bevorzugten Verbindungen der Formel IV und V enthaltend ein Strukturelement der Formel

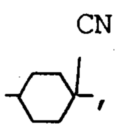, 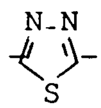 oder 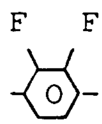

sind weiterhin lateral fluorierte Verbindungen der Formel I, insbesondere die, die ein Strukturelement der Formel

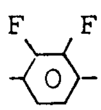

enthalten, und Tolanderivate der Formel VI enthaltend die Strukturelemente:

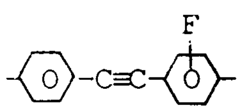 oder 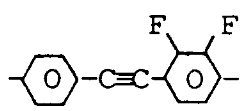

als Bestandteile der Komponente A bevorzugt.

Die Komponente B weist eine ausgeprägte Nematogenität und eine Viskosität von nicht mehr als 30 $mm^2s^{-1}$, vorzugsweise nicht mehr als 25 $mm^2s^{-1}$ bei 20 °C auf.

Besonders bevorzugte Einzelverbindungen der Komponente B sind extrem niedrig viskose nematische Flüssigkristalle mit einer Viskosität von nicht mehr als 18, vorzugsweise nicht mehr als 12 $mm^2s^{-1}$, bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer

Phasen die Nematogenität dieser Materialien verglichen werden.

Dem Fachmann sind aus der Literatur eine Vielzahl geeigneter Materialien bekannt. Besonders bevorzugt sind Verbindungen der Formel VIII

$R^4$-$A^5$-$Z^1$-$A^6$-$R^5$ VIII

worin $R^4$ und $R^5$ die für Formel IV angegebene Bedeutung besitzen,

$Z^1$ -COO-, -O-CO-, $-CH_2CH_2-$, $-OCH_2-$, $-CH_2O-$ oder eine Einfachbindung, und

$A^5$ und $A^6$ jeweils unabhängig voneinander trans-1,4-Cyclohexylen oder unsubstituiertes oder durch Fluor substituiertes 1,4-Phenylen bedeuten.

Die Flüssigkristallphasen der erfindungsgemäßen Flüssigkristallanzeigen bestehen vorzugsweise aus 2 bis 15, vorzugsweise 3 bis 18 Komponenten.

Daneben können diese Flüssigkristallpahsen auch mehr als 18 Komponenten, vorzugsweise 18 bis 25 Komponenten, enthalten.

Vorzugsweise enthalten die Phasen 2 bis 10, insbesondere 3 bis 5, Verbindungen der Formeln I bzw. V, insbesondere der Formeln Va, Vc, Ve, Vk, VI und Vm, und 2 bis 10, insbesondere 4 bis 8, Verbindungen der Formel III, insbesondere ausgewählt aus den Verbindungen der Formeln IIIa bis IIIc

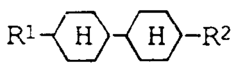

IIIa

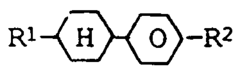

IIIb

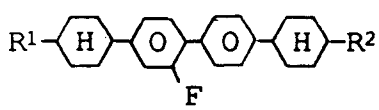

IIIc

Neben Verbindungen der Formeln I bis VIII können auch noch andere Bestandteile zugegen sein, z. B. in einer Menge von bis zu 45 % der Gesamtmischung, vorzugsweise jedoch bis zu 34 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl-oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel IX charakterisieren,

$R^{10}$-L-G-E-$R^{11}$ IX

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

G -CH = CH- -N(O) = N-
-CH-CQ- -CH = N(O)-
-C≡C- $-CH_2-CH_2-$
-CO-O- $-CH_2-O-$
-CO-S- $-CH_2-S-$
-CH = N- -COO-Phe-COO-

oder eine C-C-Einfachbindung, Q Halogen, vorzugsweise Chlor, oder -CN, und $R^{10}$ und $R^{11}$ jeweils Alkyl, Alkoxy, Alkanoyloxy oder Alkoxycarbonyloxy mit bis zu 18, vorzugsweise bis zu 8 Kohlenstoffatomen, oder

einer dieser Reste auch CN, NC, $NO_2$, $CF_3$, F, Cl oder Br bedeuten.

Bei den meisten dieser Verbindungen sind $R^{10}$ und $R^{11}$ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Der Aufbau der erfindungsgemäßen Flüssigkristallanzeigen entspricht der üblichen Geometrie, wie sie z.B. in EP-OS 0 240 379 beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Folgende Abkürzungen werden verwendet:

CCNnm 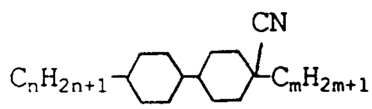

BCHn.Fm 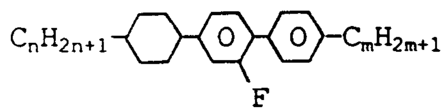

CBCnm 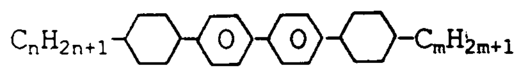

NCBnm 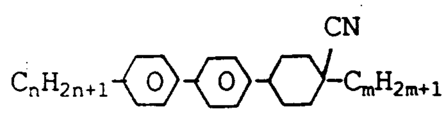

BnOm 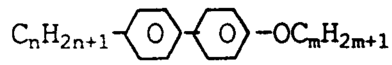

BEP-nmF 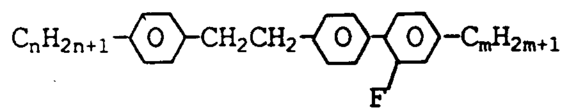

D-nOmFF 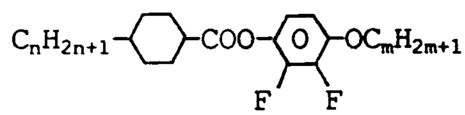

CBCnmF 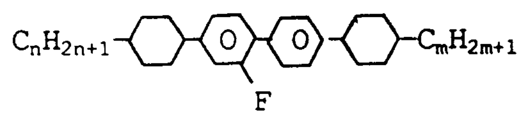

CPTPnOm
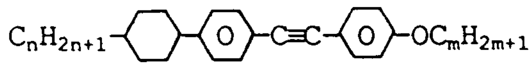

CCMOPnOm
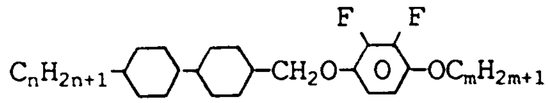

ECCPnOm
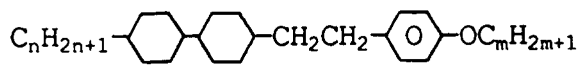

PCHnOm
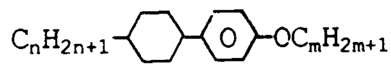

PTPnOm
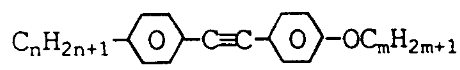

TnFFm
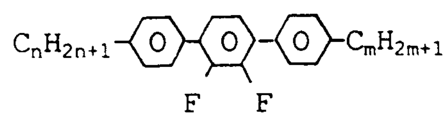

Tn.FOm
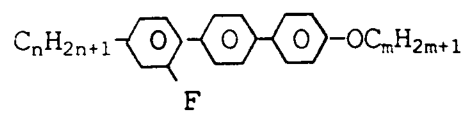

CTDPnOm
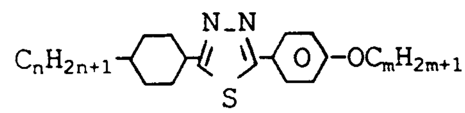

TDPnOm
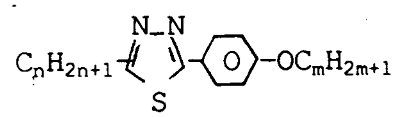

EPCHnOmFF
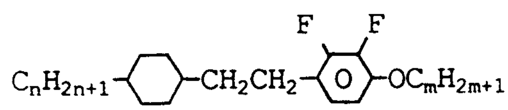

ECCPnOmFF
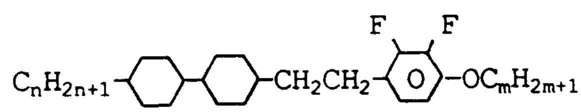

CCHnOm
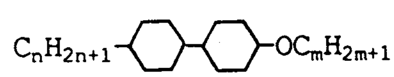

CMOPnOmFF
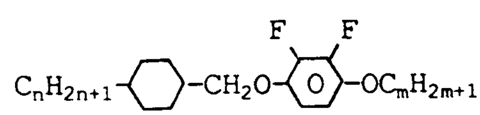

Die angegebenen Schwellenspannungswerte V (0,0), V (10,0), V (90,0) wurden in einer üblichen ECB-Zelle mit einer Schichtdicke von 5 μm bei 20 °C gemessen.

Weiterhin bedeuten:

V (0,0) Schwellenspannung [V] 0 % Transmission Blickwinkel 0°
V (10,0) Schwellenspannung [V] 10 % Transmission Blickwinkel 0°
V (90,0) Schwellenspannung [V] 90 % Transmission Blickwinkel 0°
$\Delta n$ die optische Anisotropie gemessen bei 20 °C und 589 nm
$\Delta \epsilon$ die dielektrische Anisotropie bei 20 °C

cp Klärpunkt [°C]
$\eta(T)$ Viskosität [$mm^2s^{-1}$] bei T °C
S Steilheit der Kennlinie

$$S = \left(\frac{V(90,0)}{V(10,0)} - 1\right) \cdot 100$$

ρ Spezifischer Widerstand [Ω • cm]

Die zur Messung der Schwellspannung verwendete Anzeige weist zwei planparallele Trägerplatten, im Abstand von 5 µm und Elektrodenschichten mit darüberliegenden Orientierungsschichten aus Lecithin auf den Innenseiten der Trägerplatten auf, welche eine homeotrope Orientierung der Flüssigkristalle bewirken.

## Beispiel 1

Man stellt eine Mischung bestehend aus

| Bestandteil | Gew.-% |
|---|---|
| CMOP-502FF | 9,0 |
| EPCH-502FF | 11,0 |
| CCMOP-302FF | 14,0 |
| CCMOP-502FF | 8,0 |
| ECCP-302FF | 15,0 |
| CCH-302 | 10,0 |
| CCH-303 | 12,0 |
| CCH-501 | 9,0 |
| CCH-502 | 12,0 |

her, deren physikalischen Daten aus Tabelle I entnommen werden können.

Tabelle I

| | | | |
|---|---|---|---|
| cp<br>Δn | +80<br>+0,072 | V (0,0) | 2,3 (DAP) |

## Beispiel 2

Man stellt eine flüssigkristalline Phase bestehend aus

| Bestandteil | Gew.-% |
|---|---|
| CCN-47 | 17,0 |
| CCN-55 | 16,0 |
| CCH-302 | 9,0 |
| CCH-303 | 13,0 |
| CCH-501 | 10,0 |
| CCH-502 | 10,0 |
| PCH-301 | 10,0 |
| CBC-33F | 5,0 |
| CBC-53F | 5,0 |
| CBC-55F | 5,0 |

her, deren physikalischen Daten aus Tabelle II entnommen werden können.

Tabelle II

| | | | |
|---|---|---|---|
| cp | 72 | V (0,0) | 2,7 (DAP) |
| $\eta$(20) | 24 | $\rho$ | > 1 • $10^{12}$ Ω • cm |
| $\eta$(0) | 70 | | |
| $\eta$(-20) | 285 | | |
| $\eta$(-30) | 750 | | |
| $\Delta$n | 0,060 | | |
| $\Delta\epsilon$ | -2,1 | | |
| $\epsilon\|$ | 3,3 | | |
| $\epsilon\perp$ | 5,4 | | |

**Beispiel 3**

Man stellt eine flüssigkristalline Phase her bestehend aus

| Bestandteil | Gew.-% |
|---|---|
| EPCH-502FF | 9 |
| CMOP-502FF | 5 |
| CCP-502FF | 14 |
| CCMOP-302FF | 14 |
| CCH-302 | 14 |
| CCH-303 | 14 |
| CCH-501 | 13 |
| PCH-301 | 13 |
| CBC-33F | 4 |

**Beispiel 4**

Man stellt eine nematische Flüssigkristallmischung her bestehend aus

| Bestandteil | Gew.-% |
|---|---|
| CCN-47 | 12 |
| NCB-45 | 5 |
| CCH-302 | 13 |
| CCH-303 | 7 |
| CCH-501 | 7 |
| PCH-301 | 7 |
| CBC-33 | 5 |
| CBC-53F | 7 |
| ECCP-302 | 19 |
| ECCP-502 | 18 |

**Patentansprüche**

**1.** Matrix Flüssigkristallanzeige basierend auf dem Prinzip der elektrisch kontrollierten Doppelbrechung mit

- zwei planparallelen Trägerplatten, die mit einer Umrandung eine Zelle bilden,
- integrierten nicht-linearen Elementen zur Schaltung einzelner Bildpunkte auf den Trägerplatten,

- einer in der Zelle befindlichen nematischen Flüssigkristallmischung mit negativer dielektrischer Anisotropie mit hohem spezifischen Widerstand,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad

wobei, die nematische Flüssigkristallmischung mindestens eine Verbindung enthält, welche eine Strukturelement der Formel 1, 2 oder 3

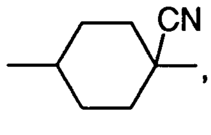
,
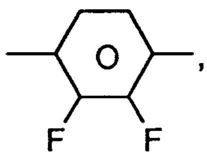
,
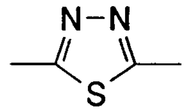

1 2 3

aufweist, dadurch gekennzeichnet, daß die Doppelbrechung Δn der Flüssigkristallmischung zwischen 0,04 und 0,10 liegt, wobei sich die Angabe der Doppelbrechung auf 20 °C und eine Wellenlänge von 589 nm bezieht.

**2.** Anzeige nach Anspruch 1, dadurch gekennzeichnet, daß die Flüssigkristallmischung einen nematischen Phasenbereich von mindestens 60 K und eine Viskosität von maximal 30 mPa.s bei 20 °C aufweist.

**3.** Anzeige nach mindestens einem der Ansprüche 1 und 2, dadurch gekennzeichnet, daß die Flüssigkristallmischung ein $\Delta\epsilon$ von etwa -0,5 bis -5 aufweist, wobei $\Delta\epsilon$ die dielektrische Anisotropie bedeutet.

**4.** Anzeige nach mindestens einem der Ansprüche 1 bis 3, dadurch gekennzeichnet, daß die Dielektrizitätskonstante $\epsilon_{\|}$ größer oder gleich 3 ist.

**5.** Anzeige nach mindestens einem der Ansprüche 1 bis 4, dadurch gekennzeichnet, daß die Flüssigkristallmischung mindestens eine Verbindung der Formel I enthält,

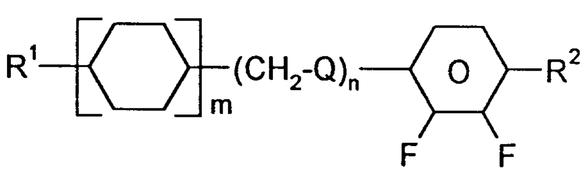

I

wobei

| | |
|---|---|
| $R_1$ und $R_2$ | jeweils unabhängig voneinander einen Alkyl- oder Alkenyl-Rest mit bis zu 16 C-Atomen, worin in diesen Resten ein oder zwei $CH_2$-Gruppen durch -O- oder -S-ersetzt sein können, |
| Q | O oder $CH_2$, |
| m | 1 oder 2, und |
| n | 0 oder 1 |

bedeuten.

**6.** Anzeige nach mindestens einem der Ansprüche 1 bis 7, dadurch gekennzeichnet, daß die Flüssigkristallmischung mindestens eine Verbindung der Formel II enthält,

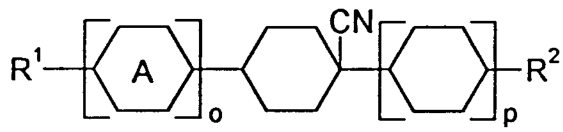

II

wobei $R^1$ und $R^2$ die für Formel I angegebene Bedeutung besitzen, und

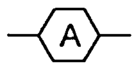 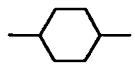 oder 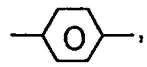,

o 1 oder 2, und
p 0 oder 1
bedeuten.

**7.** Anzeige nach mindestens einem der Ansprüche 1 bis 6, dadurch gekennzeichnet, daß die Flüssigkristallmischungen neben den Verbindungen, welche ein Strukturelement der Formeln 1, 2 oder 3 aufweisen, mindestens eine Verbindung der Formel III enthält,

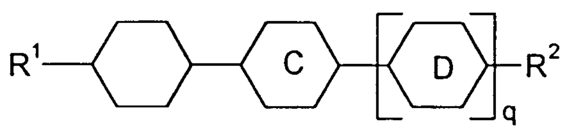

III

wobei $R^1$ und $R^2$ die für Formel I angegebene Bedeutung besitzen,

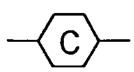 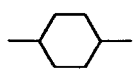, 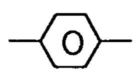 oder 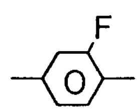,

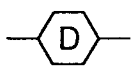 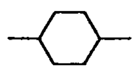 oder 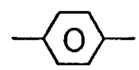, und

q 0, 1 oder 2
bedeuten, wobei im Falle q = 2 die Ringe

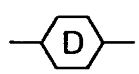

gleich oder verschieden sein können.

**8.** Anzeige nach Anspruch 7, dadurch gekennzeichnet, daß die Flüssigkristallmischung mindestens eine Verbindung der Formel IIIa enthält,

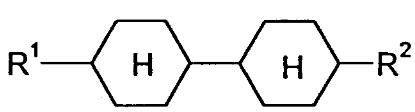

IIIa

worin $R^1$ und $R^2$ die angegebene Bedeutung besitzen.

**9.** Verwendung einer nematischen Flüssigkristallmischung der in mindestens einem der Ansprüche 1 bis 8 definierten Zusammensetzung zur Verbesserung der spezifischen Widerstände von Matrix Flüssigkristallanzeigen basierend auf dem Prinzip der elektrisch kontrollierten Doppelbrechung.

**10.** Verwendung einer nematischen Flüssigkristallmischung nach Anspruch 9, welche mindestens eine Verbindung ausgewählt aus den Formeln I und II und mindestens eine Verbindung der Formel IIIa enthält.

**Claims**

**1.** Matrix liquid-crystal display based on the principle of electrically controlled birefringence, having
- two plane-parallel outer plates, which, together with a frame, form a cell,
- integrated nonlinear elements for switching individual pixels on the outer plates,
- a nematic liquid-crystal mixture of negative dielectric anisotropy and high specific resistance which is located in the cell,
- electrode layers covered by alignment layers on the insides of the outer plates, and
- a tilt angle between the longitudinal axis of the molecules at the surface of the outer plates and the outer plates of from about 85 degrees to 95 degrees,

in which the nematic liquid-crystal mixture contains at least one compound which contains a structural element of the formula 1, 2 or 3

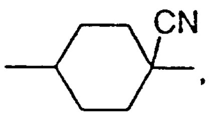, 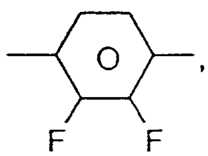, 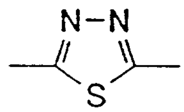

1 2 3

characterized in that the birefringence Δn of the liquid-crystal mixture is between 0.04 and 0.10, the birefringence data being based on 20 °C and a wavelength of 589 nm.

**2.** Display according to Claim 1, characterised in that the liquid-crystal mixture has a nematic phase range of at least 60 K and a maximum viscosity of 30 mPa.s at 20 °C.

**3.** Display according to at least one of Claims 1 and 2, characterised in that the liquid-crystal mixture has a Δε of from about -0.5 to -5, Δε being the dielectric anisotropy.

**4.** Display according to at least one of Claims 1 to 3, characterised in that the dielectric constant $\epsilon_{\parallel}$ is greater than or equal to 3.

**5.** Display according to at least one of Claims 1 to 4, characterised in that the liquid-crystal mixture contains at least one compound of the formula I

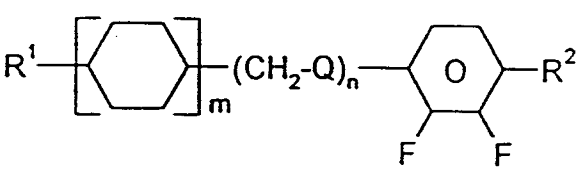

I

in which

| | |
|---|---|
| $R^1$ and $R^2$ | are each, independently of one another, an alkyl or alkenyl radical having up to 16 carbon atoms, it being possible for one or two $CH_2$ groups in these radicals to be replaced by -O- or -S-, |
| Q | is O or $CH_2$, |
| m | is 1 or 2, and |
| n | is 0 or 1. |

6. Display according to at least one of Claims 1 to 7 [sic], characterised in that the liquid-crystal mixture contains at least one compound of the formula II

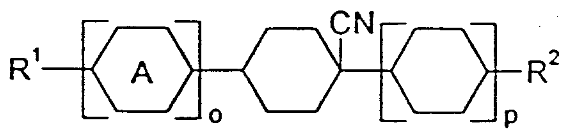

II

in which $R^1$ and $R^2$ are as defined for formula I, and are

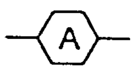 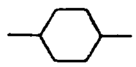 or 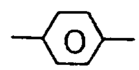 ,

o is 1 or 2, and
p is 0 or 1.

7. Display according to at least one of Claims 1 to 6, characterised in that the liquid-crystal mixtures contain, in addition to the compounds which contain a structural element of the formula 1, 2 or 3, at least one compound of the formula III

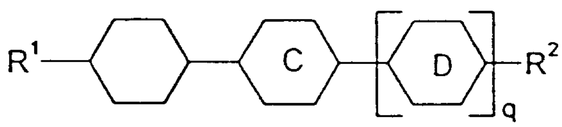

III

in which $R^1$ and $R^2$ are as defined for the formula I,

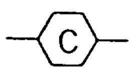 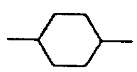 , 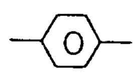 or 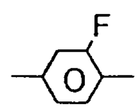 ,

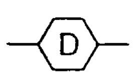 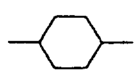 or 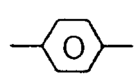 , and

q is 0, 1 or 2,
it being possible for the rings

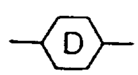

to be identical or different in the case where q = 2.

8. Display according to Claim 7, characterized in that the liquid-crystal mixture contains at least one compound of the formula IIIa

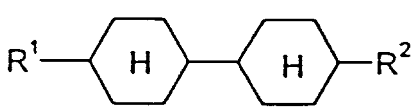

IIIa

in which $R^1$ and $R^2$ are as defined above.

**9.** Use of a nematic liquid-crystal mixture of the composition defined in at least one of Claims 1 to 8 for improving the resistivity of matrix liquid-crystal displays based on the principle of electrically controlled birefringence.

**10.** Use of a nematic liquid-crystal mixture according to Claim 9 which contains at least one compound selected from the formulae I and II and at least one compound of the formula IIIa.

**Revendications**

**1.** Gangue d'affichage à cristaux liquides basé sur le principe de la double réfraction à commande électrique, comportant

- deux plaques de support planes et parallèles formant, avec une bordure périphérique, une cellule,
- des éléments non-linéaires intégrés pour la commutation de points d'images individuels sur plaques de support,
- un mélange à cristaux liquides nématique, ayant une anisotropie diélectrique négative et une haute résistance spécifique, qui se trouve dans la cellule,
- des couches d'électrodes et, sur celles-ci, des couches d'orientation, sur les faces internes des plaques de support et
- un angle réglé à environ 85 à 95 grades entre l'axe longitudinal des molécules à la surface des plaques de support et les plaques de support elles-mêmes,

le mélange à cristaux liquides nématique contenant au moins un composé qui possède un élément de structure de formule 1, 2 ou 3

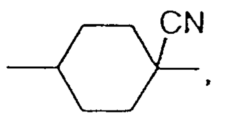,
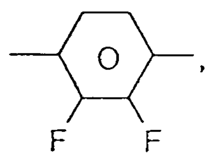,
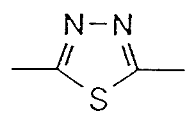

1 2 3

caractérisée en ce que la double réfraction Δn du mélange à cristaux liquides se situe entre 0,04 et 0,10, cette double réfraction se rapportant à la température de 20 °C et à ue longueur d'onde de 589 nm.

**2.** Affichage selon revendication 1, caractérisé en ce que le mélange à cristaux liquides présente un domaine de phase nématique d'au moins 60 K et une viscosité de 30 mPa.s à 20 °C au maximum.

**3.** Affichage selon au moins une des revendications 1 et 2, caractérisé en ce que le mélange à cristaux liquides a une anisotropie diélectrique $\Delta\epsilon$ d'environ -0,5 à -5.

**4.** Affichage selon au moins une des revendications 1 à 3, caractérisé en ce que la constante diélectrique $\epsilon_{\parallel}$ est supérieure ou égale à 3.

**5.** Affichage selon au moins une des revendications 1 à 4, caractérisé en ce que le mélange à cristaux liquides contient au moins un composé de formule I

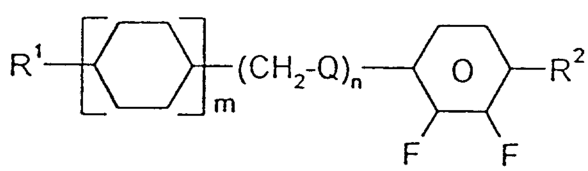

I

dans laquelle

$R^1$ et $R^2$ représentent chacun, indépendamment l'un de l'autre, un groupe alkyle ou alcényle contenant

jusqu'à 16 atomes de carbone et dans lequel un ou deux groupes $CH_2$ peuvent être remplacés par -O- ou -S-,

Q représente 0 ou $CH_2$,
m est égal à 1 ou 2 et
n est égal à 0 ou 1.

**6.** Affichage selon au moins une des revendications 1 à 5, caractérisé en ce que le mélange à cristaux liquides contient au moins un composé de formule II

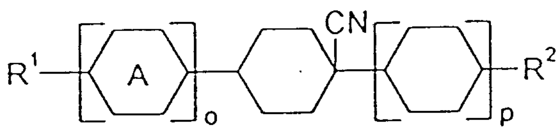 II

dans laquelle $R^1$ et $R^2$ ont les significations indiquées en référence à la formule I et

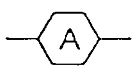 représente 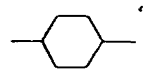 ou 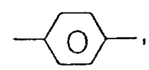,

o est égal à 1 ou 2 et
p est égal à 0 ou 1.

**7.** Affichage selon au moins une des revendications 1 à 6, caractérisé en ce que le mélange à cristaux liquides, en plus des composés contenant un élément de structure de formule 1, 2 ou 3, contient au moins un composé de formule III

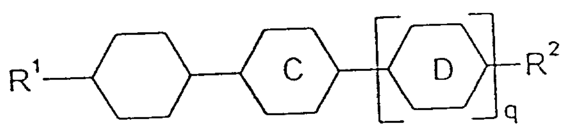 III

dans laquelle $R^1$ et $R^2$ ont les significations indiquées en référence à la formule I,

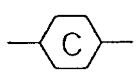 représente 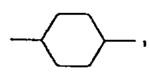, 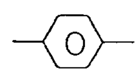 ou 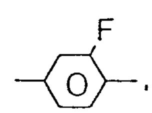,

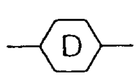 représente 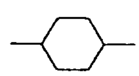 ou 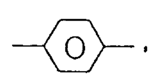, et

q est égal à 0, 1 ou 2 et
lorsque q = 2, les cycles

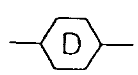

peuvent être identiques ou différents.

**8.** Affichage selon revendication 7, caractérisé en ce que le mélange à cristaux liquides contient au moins un composé de formule IIIa

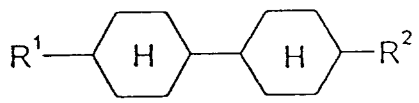

IIIa

dans laquelle $R^1$ et $R^2$ ont les significations indiquées ci-dessus.

**9.** Utilisation d'un mélange à cristaux liquides nématique de composition définie dans au moins une des revendications 1 à 8 en vue d'améliorer la résistance spécifique de gangues d'affichages à cristaux liquides basés sur le principe de la double réfraction à commande électrique.

**10.** Utilisation d'un mélange à cristaux liquides nématique selon revendication 9, qui contient au moins un composé choisi parmi ceux qui répondent aux formules I et II et au moins un composé de formule IIIa.